# EUROPEAN PATENT SPECIFICATION

(11) **EP 0 368 313 B1**
(45) Date of publication and mention of the grant of the patent: **25.06.1997**
(21) Application number: 89120792.0
(22) Date of filing: 09.11.1989
(51) Int. Cl.: H04N 7/087, H04N 5/76

(54) **Video tape recorder capable of receiving teletext broadcasting**
Videobandrecorder zum Empfangen einer Teletext Rundfunkübertragung
Enregistreur à bande vidéo en mesure de recevoir une diffusion de télétexte

(30) Priority: 09.11.1988 JP 283227/88; 27.09.1989 JP 252973/88
(43) Date of publication of application: 16.05.1990
(73) Proprietor: SANYO ELECTRIC CO., LTD., Moriguchi-shi, Osaka (JP)
(72) Inventor: Enomoto, Mitsunobu, Nara-shi Nara-ken (JP); Domura, Tatsuaki, Osaka-shi Osaka-fu (JP); Fujita, Takashi, Osaka-shi Osaka-fu (JP)
(74) Representative: Glawe, Delfs, Moll & Partner

(56) References cited:
- FUNK-TECHNIK. vol. 41, no. 6, 30 June 1986, HEIDELBERG DE pages 249 - 251; C.L. M.: 'Videorecorder Programmieren mit VPV'
- IEEE TRANSACTIONS ON CONSUMER ELECTRONICS. vol. 34, no. 3, 30 August 1988, NEW YORK US pages 788 - 792; U.BENSCH: 'VPV-Videotext programs Videorecorder'
- IEEE TRANSACTIONS ON CONSUMER ELECTRONICS. vol. 34, no. 3, 30 August 1988, NEW YORK US pages 814 - 818; G.ZEISEL ET AL: 'An Interactive Menu-driven Remote Control Unit for TV-Receivers and VC-Recorders'
- NTZ NACHRICHTECHNISCHE ZEITSCHRIFT. vol. 35, no. 6, 30 June 1982, BERLIN DE pages 368 - 376; H.ECKHARD KRUGER: 'Das digitale Fernsehkennungssystem'

## Description

### BACKGROUND OF THE INVENTION

### Field of the Invention

The present invention relates to a video tape recorder (hereinafter referred to as a VTR) capable of receiving teletext broadcasting and, more specifically, to a VTR in which reservation of video recording can be carried out by utilizing a program list, that is, information such as the date of broadcast, start time, title of the program and so on of programs to be put on the air, transmitted as a part of the teletext data.

### Description of the Background Art

In a conventional VTR, various items such as the data of broadcast, start time, end time, channel number and so on must be inputted one by one through key operation to carry out video recording reservation. Consequently, a large number of key operations have been needed for reserving recording of a program, making complicated the procedure, and sometimes desired programs could not be recorded due to erroneous inputs.

Recently, various broadcasting stations have started so-called teletext broadcasting transmitting character information. In the teletext broadcasting, information corresponding to characters of two lines, for example, is multiplexed on a video signal to be broadcasted in the form of character code signal in accordance with internationally common teletext standard, in the vertical blanking period of the television video signal, and the information is stored in a memory of a receiver. When character information corresponding to one picture is once stored in the memory, the information is read and supplied superposed on the video signal to a display apparatus. The teletext data, that is, the character information, is adapted to be identified by every picture by a page number.

In the teletext broadcasting, a so-called program list including information such as the date of broadcast, start time, end time, title and so on of programs to be put on the air is broadcasted as one of the above described character information. A method of reserving video recording by utilizing such a program list received by a VTR capable of receiving teletext broadcasting has been proposed and disclosed in, for example, German Patent Publication DE-C-3,335,082.

In this method, information such as the date of broadcast and the start time, which is the content of the program list is displayed as character information on a screen of a display apparatus connected to the VTR. An operator designates a desired program by means of a cursor or the like while monitoring the displayed character information, so as to reserve recording of a desired program by taking the data necessary for reserving video recording into a reservation data memory of the VTR. By this method, the number of key operations necessary for reserving video recording of a program can be significantly reduced and, in addition, erroneous inputs can be prevented, since the desired program can be reserved while monitoring the titles of the programs displayed on the screen.

Video tape recorder according to the precharacterizing part of the claims 1 and 7 is known from IEEE Transactions on consumer electronics, Vol. 34, No. 3, August 1988 "VPV-Videotext programs Videorecorder" by U. Bensch, This document proposes to provide a VPV (Videotext programs Videorecorder) standard.

In a similar way, in Germany, display formats of the date and time of the program list are fixed. Therefore, when the date and the time information is to be taken for reserving recording of a program, the date and time data have only to be recognized in accordance with the fixed format on the side of the receiver (VTR).

However, except for Germany, there is no standardized display format of the time or date constituting the program list to be broadcasted on the teletext broadcasting. For example, one station displays the time 15 minutes past 10 as "10:15" and another station displays as "1015". There are various and many display formats of time.

Similarly, there are various and many display formats of date such as the date of broadcast. For example, the date, May 15th may be represented as "15.May" or "May 15".

Therefore, the conventional method of reserving video recording of VTR in which date and time are recognized in accordance with the fixed formats can not correspond to the various and many display formats of time or date. When a program list displayed in a different format and not in the predetermined fixed format is received, the display of time or date may not be properly recognized. Numerals which are not the display of time may be erroneously recognized as time, and the numerals which are not the display of date may be erroneously recognized as date.

### SUMMARY OF THE INVENTION

Therefore, an object of the present invention is to provide a VTR which can properly recognize time or date to utilize the same for video recording reservation, no matter what display form of the time or date is used in a program list transmitted in teletext broadcasting.

According to the invention this object is achieved by a video tape recorder according to the claims 1 or 7. The dependent claims are related to further advantageous aspects of the present invention.

Therefore, main advantage of the present invention is that video recording reservation data indicating time or date can be surely taken into the VTR without error by simple key operation from a program list regardless of the form of the list.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a schematic block diagram showing a VTR in accordance with one embodiment of the present invention;
Fig. 2 is a block diagram showing details of main portions of the VTR shown in Fig. 1;
Figs. 3 and 4 are flow charts illustrating the operation of the VTR shown in Fig. 2;
Figs. 5A and 5B schematically show the operation of the VTR shown in Fig. 2;
Fig. 6 is a block diagram showing details of main portions of a VTR in accordance with another embodiment of the present invention;
Fig. 7 is a flow chart illustrating the operation of the VTR shown in Fig. 6;
Figs. 8A and 8B schematically show the operation of the VTR shown in Fig. 6; and
Fig. 9 shows an internal ROM table of a date decoding circuit shown in Fig. 6.

### DESCRIPTION OF THE PREFERRED EMBODIMENTS

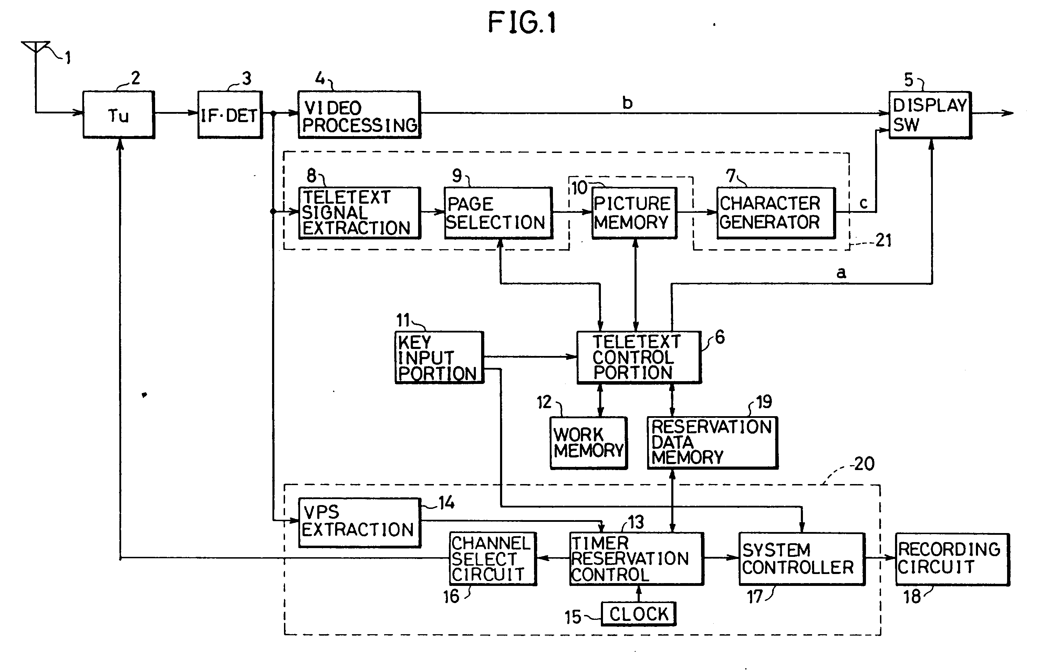

The whole structure of a VTR in accordance with one embodiment of the present invention will be described with reference to Fig. 1. Referring to Fig. 1, a broadcasting signal captured by an antenna 1 is selected for reception by a tuner 2 to be applied to an intermediate frequency and detecting circuit (hereinafter referred to as an IF·DET). The channel selecting operation of the tuner 2 is controlled by a signal from a channel selecting circuit 16, which will be described later. The output from the IF·DEP 3 is applied to a video signal processing circuit 4, a teletext signal extracting circuit 8 and a VPS (Video Program System) extracting circuit 14.

A video signal b processed by the video signal processing circuit 4 is applied to a display switching circuit 5 whose switching is controlled by a switching signal a from a teletext controlling portion 6, which will be described later, constituted by a microcomputer.

A teletext signal (coded character information) multiplexed in the vertical blanking period is extracted by a teletext signal extracting circuit 8 out of the video signal outputted from the IF·DET 3 to be applied to a page selecting circuit 9. The page selecting circuit 9 extracts data of the page number previously designated by the teletext controlling portion 6 out of the extracted teletext signal to apply the same to a picture data memory 10. In the picture data memory 10, the picture data of the specified page number selected by the page selecting circuit 9 is written in accordance with a control signal from the teletext controlling portion 6. The data written in the picture data memory 10 is read in accordance with a control signal from the teletext controlling portion 6 to be applied to a character generator 7. The character generator 7 converts the received teletext signal into a character signal c to apply the same to a display switching circuit 5. The teletext signal extracting circuit 8, the page selecting circuit 9 and the character generator 7 constitute a teletext decoder 21.

The display switching circuit 5 selects either the video signal b from the video signal processing circuit 4 or the character signal c from the character generator 7 to output the same in accordance with a switching signal a from the teletext controlling portion 6.

As described above, the teletext controlling portion 6 controls display of the screen by sending instruction to the page selecting circuit 9 and to the display switching circuit 5 and carries out various functions for reserving video recording. These functions will be described in more detail later.

A key input portion 11 is operated by a user, and the teletext controlling portion 6 carries out processes corresponding to the key operation. A work memory 12 is used during processes for reserving video recording of programs by the teletext controlling portion 6, the details of which will be described later.

The reservation of video recording of a program by the teletext controlling portion 6 will be briefly described in the following. First, by the operation of the key input portion 11 by a user, a picture of a prescribed page number of the teletext data, that is, the program list, is displayed on a screen of a display apparatus (not shown). The user further operates the key input portion 11 to move a cursor on the screen to select a desired program, and operates a video recording reservation key included in the key input portion 11. The teletext controlling portion 6 writes program reservation data corresponding to the selected program to a reservation data memory 19. Writing of the program reservation data to the memory 19 will be described in detail later.

The reservation data written in the reservation data memory 19 is read by a timer reservation controlling portion 13 formed of a microcomputer.

Meanwhile, the VPS signal multiplexed only in a specified vertical blanking period is extracted by the VPS signal extracting circuit 14 from the video signal outputted from the IF·DET 3 to be applied to the timer reservation controlling portion 13. The VPS signal is used for controlling the start time, the end time and the like of the program reserved in the VTR from the side of broadcasting station, when the start time, the end time or the like of the program is changed. Time data from a clock circuit 15 is also applied to the timer reservation controlling portion 13. The timer reservation controlling portion 13 compares the time data with the reservation data or, when there is a VPS signal, the VPS signal with the reservation data. When both data match with each other, the controlling portion 13 controls the channel selecting circuit 16 to have the tuner 2 select a prescribed program, and applies a video recording instruction to a system controller 17. Upon reception of the video recording instruction, the system controller 17 controls a recording circuit 18 correspondingly, to start video recording operation. When the video recording is completed at the end time, the program reservation data written in the reservation data memory 19 is erased. The above described timer reservation controlling portion 13, the VPS signal extracting circuit 14, the clock circuit 15, the channel selecting circuit 16 and the system controller 17 constitute a VTR controlling portion 20. In normal operation, the system controller 17 carries out various operations of the VTR, that is, reproduction, fast forwarding, rewinding, stopping and the like in accordance with the input through the key input portion 11.

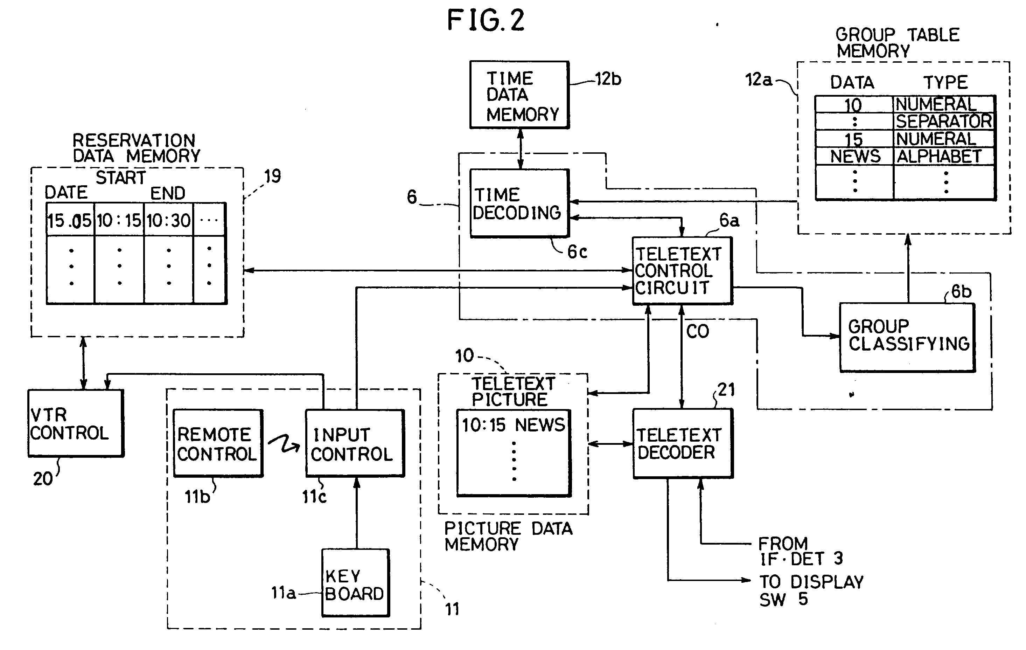

Details of the main portions of the VTR shown in Fig. 1 will be described with reference to Fig. 2. Referring to Fig. 2, the key input portion 11 of Fig. 1 comprises a keyboard 11a provided on the body of the VTR, a remote control transmitter 11b and an input controlling circuit 11c. Instructions inputted through the key board 11a or through the remote control transmitter 11b are converted into common code signals by the input controlling circuit 11c to be applied to the teletext controlling portion 6. The teletext controlling portion 6 carries out reservation of video recording by writing the program reservation data to the reservation data memory 19, based on a signal from the input controlling circuit 11c. In the second embodiment, the data of date "May 15", data of the start time "10:15" and data of the end time "10:30" are stored in the reservation data memory 19, and the reservation video recording is carried out by the VTR in accordance with the reservation data.

More specifically, the VTR is set in a teletext receiving mode by a prescribed operation of the keyboard 11a or the remote control transmitter 11b. Namely, codes related to the teletext control are applied from the input controlling circuit 11c to the teletext controlling circuit 6a in the teletext controlling portion 6, and the teletext controlling circuit 6a supplies commands CO to the teletext decoder 21 to have the teletext decoder 21 carry out teletext processing corresponding to the given code, for example, designation of page number.

The teletext decoder 21 extracts a teletext signal multiplexed in the vertical blanking period of the video signal from the IF·DET 3 of Fig. 1 in accordance with the command CO transmitted from the teletext controlling circuit 6a and applies the same to the picture data memory 10. The teletext signal once stored in the memory 10 is read to the teletext decoder 21, and it is converted into a character signal c by the teletext decoder 21 to be outputted. The teletext controlling circuit 6a is adapted to directly read the content of the picture data memory 10.

When an instruction to carry out reservation of video recording using the program list is inputted to the teletext controlling circuit 6a by the operation of the keyboard 11a or the remote control transmitter 11b, the teletext controlling circuit 6a directly reads the content of the picture data memory 10 to apply the same to the group classifying circuit 6b. The group classifying circuit 6b reads the codes of the applied character data one by one successively and determines the type of the character (for example, numerals, alphabets and so on). When there are continuous characters of the same type, the circuit classifies these characters as one group. The group classifying circuit 6b successively classifies a plurality of characters read from the memory 10 into a plurality of types of character groups, with the results stored in a group table memory 12a constituting the work memory 12. For example, when the character data read from the picture data memory 10 is "10:15 NEWS", the group classifying circuit 6b carries out classifying operation such as shown in the group table memory 12a of Fig. 2. Such classification can be realized in software by constituting the group classifying circuit 6b with microcomputers.

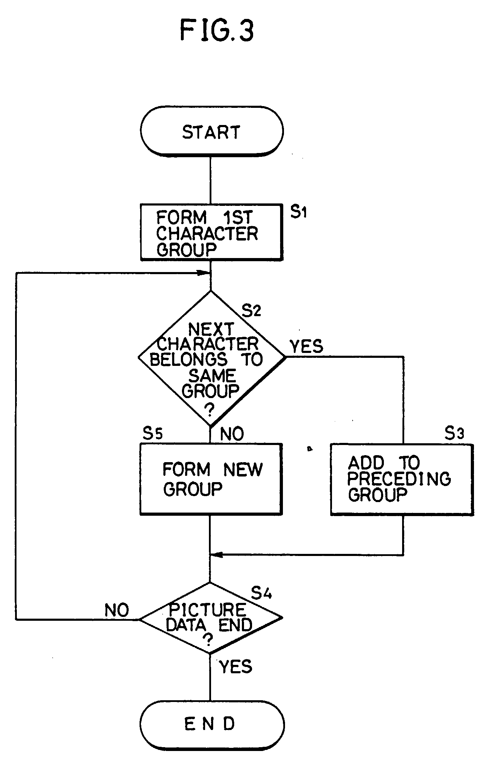

The classifying operation will be described with reference to the flow chart of Fig. 3. In step S1, the group classifying circuit 6b forms a group of characters of a fist type. In this embodiment, the character data read from the picture data memory 10 is "10:15 NEWS". Therefore, the first character is "1". Accordingly, the first character group is the group of numerals.

In the step S2, whether or not the next character is of the same type as the preceding character is determined. In this case, the next character is "0" and therefore it is the same type as the preceding character. Accordingly, the character "0" is added to the preceding group (numeral group) in the next step S3. In step S4, whether or not all the content in the picture data memory 10 are read is determined. In this example, the answer is no, so that the program returns to the step S2.

In this step S2, whether or not the next character is of the same type as the preceding one is determined. In this case, the character is ":", which is not a numeral but a separator. It is a character of a different type, so that a new group (separator group) is formed in the step S5 in which the character ":" is included. When it is determined in the step S4 that the repetitious classifying operation is carried out on every character data read from the picture data memory 10, then the group classifying circuit 6b finishes the classifying operation.

The data stored in the group table memory 12a in this manner is successively read by the time decoding circuit 6c of the teletext controlling portion 6. The time decoding circuit 6c decodes the start time of broadcast from the read data based on the arrangement of the character group indicating numerals. Namely, no matter whether the display format of time is "10:15" or "1015", the time can be correctly decoded by this operation. The decoding operation can be realized in software by constituting the time decoding circuit 6c with microcomputers.

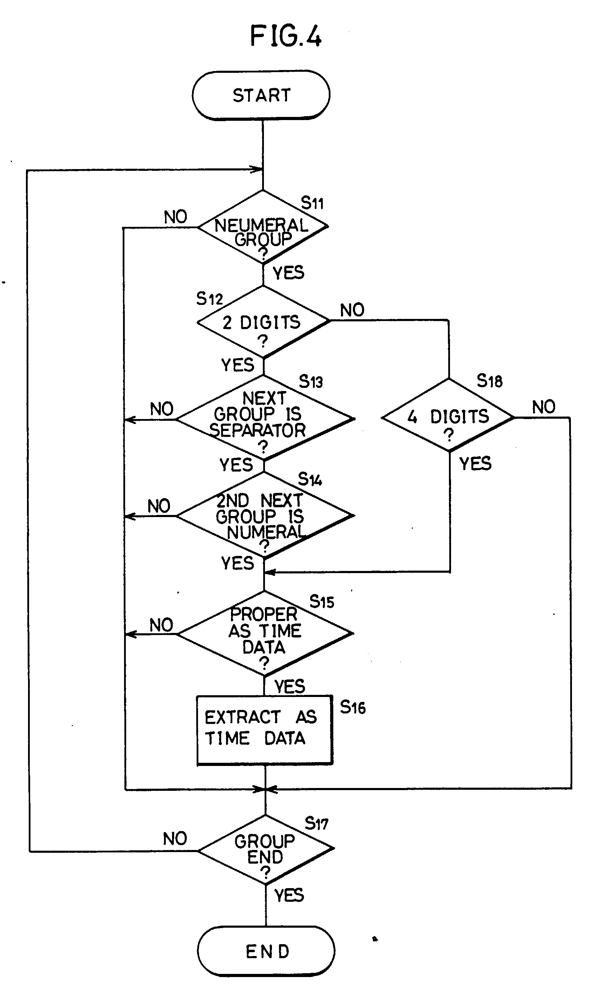

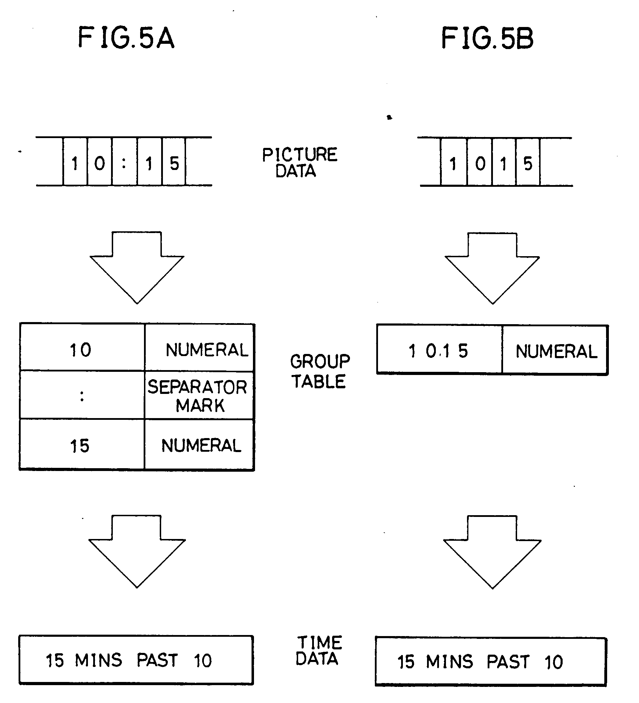

The decoding operation will be described with reference to the flow chart of Fig. 4 and schematic diagrams of Figs. 5A and 5B.

When the time data is applied in the form of "10:15" as described above (Fig. 5A), whether or not the first character group is a numeral group is determined in the step S11. If it is determined in the step S11 that the first character group is a numeral group of "10", then whether or not the numeral group is consisted of two digits is determined in the next step S12. Since the numeral group "10" contains two digits, the program proceeds to the next step S13 in which whether or not the next group is a separator group is determined. Since ":" is a separator group, the program proceeds to the next step S14 in which whether or not the second character group is a numeral group is determined. Since the second character group is a numeral group of "15", the program proceeds to the next step S15.

In the step S15, whether or not the data "10:15" is proper as the time data is determined. For example, the data "37:11" is apparently wrong as a time display of 24 hours. In such a case, the data is not regarded as the time data. Since the data "10:15" in this embodiment is determined acceptable as the time display, the time data are extracted as the data indicating "15 minutes past ten" in the step S16 and they are stored in the time data memory 12b constituting the work memory 12.

In the step S17, whether or not the decoding operation is done on every content in the group table memory 12a is determined. If the decoding operation has not yet been completed, the program returns to the step S11. When it is determined in the step S17 that decoding is done for all the contents in the group table memory 12a, then the time decoding circuit 6c finishes the above described decoding operation.

When the time data is applied in the form of "1015" as shown in Fig. 5B, it is determined in the step S12 that the number of digits in the numeral group is not 2, and the program proceeds to the step S18. In the step S18, whether or not the number of digits is 4 is determined. In this case, since the numeral group contains 4 digits of "1015", the program proceeds to the step S15. If the number of digits is not 4 in the step S18, the program proceeds to the step S17.

If is determined in the step S15 that the data "1015" is proper as the time data, then the data is extracted as the time data indicating "15 minutes past 10" in the next step S16 to be stored in the time data memory 12b.

Thereafter, the display "10:15" or "1015" on the screen of the display apparatus connected to the VTR is selected by moving a cursor or the like through the operation of the keyboard 11a or the remote control transmitter 11b, and a reservation button is pressed. Then, the teletext controlling circuit 6a transfer the time data indicating "15 minutes past 10" stored in the time data memory 12b to the reservation data memory 19 to be stored therein. In this manner, the reservation of video recording by the teletext data is completed.

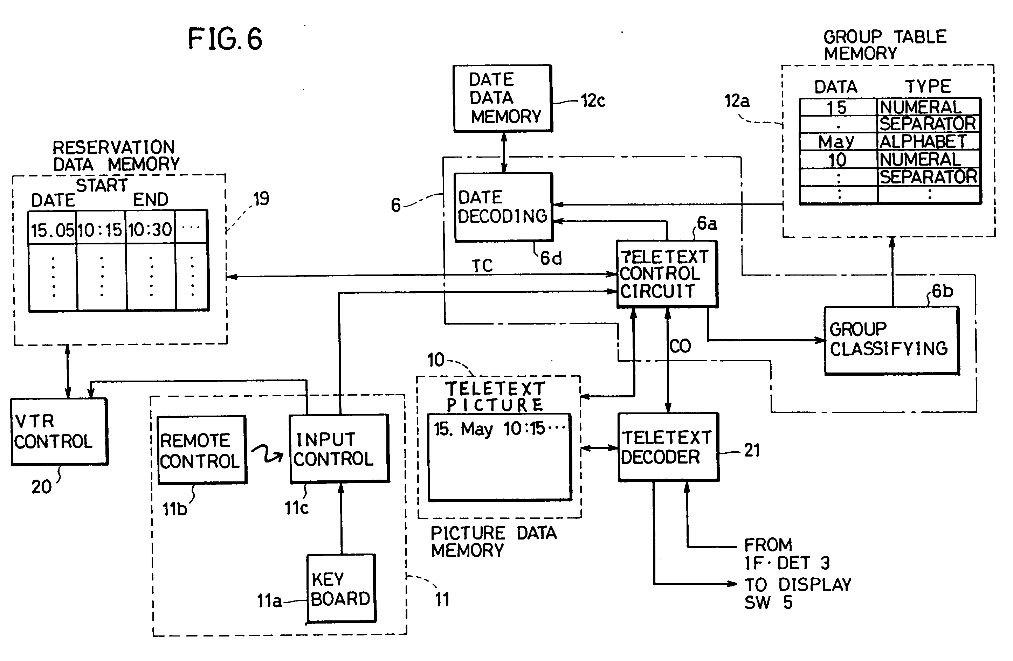

Main portions of a VTR in accordance with a second embodiment of the present invention will be described in the following with reference to Fig. 6. The second embodiment relates to a VTR in which recording reservation data indicating date of broadcast can be surely taken in the reservation data memory regardless of the form of display of the program list. The embodiment shown in Fig. 6 is the same as that shown in Fig. 2 except the following points.

More specifically, the teletext data stored in the picture data memory 10 includes data of broadcasting date, for example "15.May" before the time data and such character data is classified by the group classifying circuit 6b in the similar manner as described in the first embodiment, and stored in the group table memory 12a in accordance with respective character groups.

The character data stored in the group table memory 12a in this manner is successively read by a date decoding circuit 6d in the teletext controlling portion 6 and the date decoding circuit 6d decodes the date of broadcast based on the arrangement of the read character data. Such decoding operation can be realized in software by constituting the date decoding circuit 6d by microcomputers.

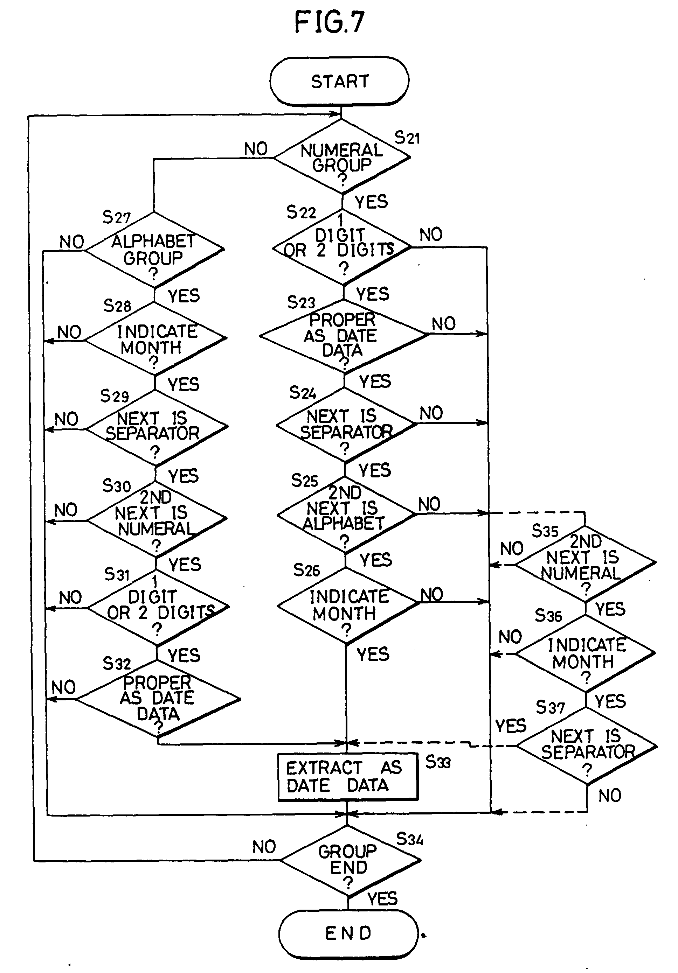

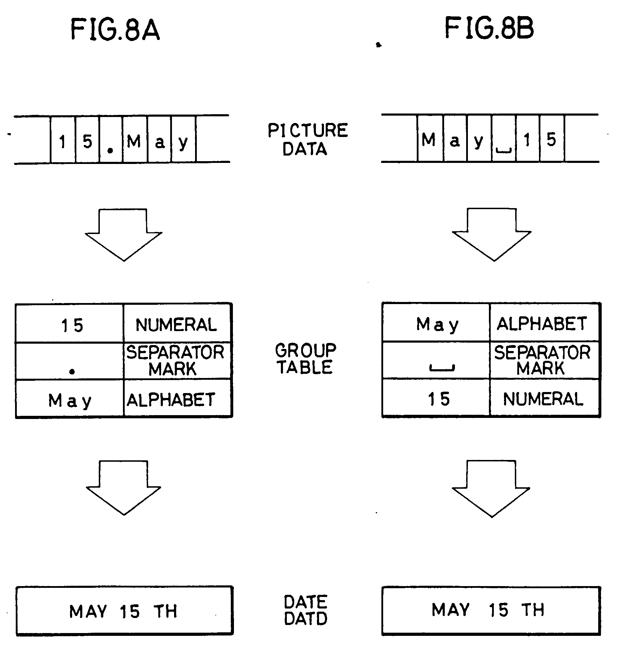

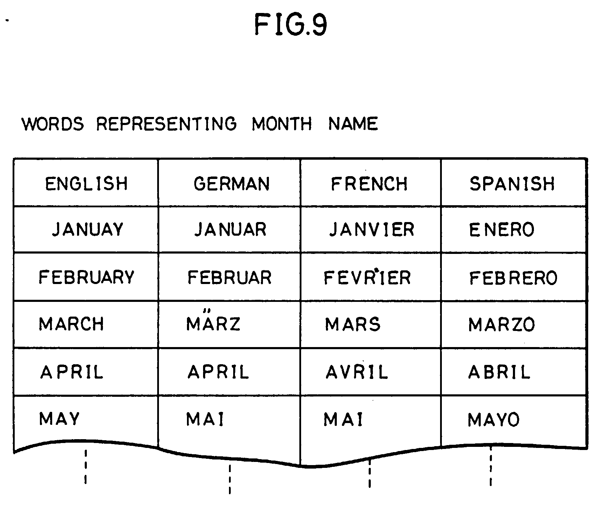

The date decoding operation will be described in the following with reference to the flow chart of Fig. 7, schematic diagrams of Figs. 8A and 8B and a ROM table in Fig. 9.

Referring to Fig. 8A, when the date data is given in the form of "15.May", then whether or not the first character group is a numeral group is determined in the step S21. If it is determined in the step S21 that the first character group is a numeral group of "15", then whether or not the group contains one digit or two digits is determined in the step S22. The numeral group "15" includes two digits, the program proceeds to the next step S23 in which whether or not the data "15" is proper as the data of date is determined. For example, such display as "33" is clearly wrong as a date and such data is not regarded as date data. The data "15" in this embodiment is determined to be acceptable as a date display, so that the program proceeds to the next step S24.

In the step S24, whether or not the next group is a separator group is determined. Since the next character group "." is a separator group, the program proceeds to the step S25.

In the step S25, whether or not the second next character group is a group of alphabets is determined. Since the character group is a group of alphabets "May", the program proceeds to the step S26.

The group of alphabets includes groups of letters other than English, for example, Spanish, French, German and so on. For example, a character group including "Mayo" which means May in Spanish is also regarded as a group of alphabets.

In the step S26, whether or not the group of alphabets is a group of characters indicating month is determined. This is done by providing a ROM table in which words representing months in various languages are stored in advance as shown in Fig. 9 in the date decoding circuit 6d and by comparing the read character data with the contents of the ROM table. Since the group "May" is regarded as acceptable as month representation, the data is extracted in the step S33 as the data indicting "May 15th", which data is stored in a date data memory 12c constituting the work memory 12. The date data once decoded can be displayed in some suitable form such as "15.05".

In the step S34, whether or not the date decoding operation has been carried out on all the contents in the group table memory 12a is determined. If not, the program returns to the step S21. When it is determined in the step S34 that the date decoding has been carried out on every content in the group table memory 12a, the date decoding circuit 6d finishes the decoding operation.

When the date data is given in the form of "May 15" as shown in Fig. 8B, whether or not the first character group is a numeral group is determined in the step S21. In this case, the first character group is a group of alphabets "May", so that the program proceeds to the step S27.

In the step S27, whether or not the character group is a group of alphabets is determined. Since this group is a group of alphabets, the program proceeds to the step S28.

In the step S28, whether or not the group of alphabets is a group of characters indicating month is determined in the same manner as the above described step S26. Since "May" is determined to be acceptable as a month representation, the program proceeds to the step S29.

In the step S29, whether or not the next group is a separator group is determined. The next data is a space of 1 character, which is a separator, so that the program proceeds to S30.

In the step S30, whether the second next character group is a numeral group or not is determined. When it is determined in the step S30 that the second next character group is a numeral group of "15", then in the next step S31, whether or not it is a numeral of one digit or two digits is determined. Since the numeral group "15" includes two digits, the program proceeds to the step S32 in which whether or not the data "15" is proper as date data is determined. Since the data "15" is determined as acceptable as date representation, the program proceeds to the step S33 in which the date data is extracted as the data indicating "May 15th" to be stored in the date data memory 12c.

In the step S34, whether or not the decoding operation is carried out on every content in the group table memory 12a is determined. If not, the program returns to S21. When it is determined in the step S34 that the decoding is carried out on every content in the group table memory 12a, the date decoding circuit 6d finishes the coding operation.

When the date data is given in the form of "15.5.", then the processes of the steps S21 to S25 of Fig. 7 are carried out, and then the processes of the steps S35 to S37 are carried out. The date data is extracted as the data representing "May 15th" in the step S33 to be stored in the date data memory 12c.

Thereafter, the time data is selected by moving a cursor or the like through the operation of the keyboard 11a or the remote control transmitter 11b as described above and the reservation button is pressed, then the teletext controlling circuit 6a transfers the data indicating "May 15th" stored in the date data memory 12c as well as the time data to the reservation data memory 19 to be stored therein.

In this manner, the reservation of video recording utilizing the teletext data is realized.

As described above, according to the embodiments of the present invention, the time or date can be accurately recognized regardless of the display formats of time or date of a program list transmitted by the teletext broadcasting, whereby the time and labor of key operations for reserving video recording can be considerably reduced, and in addition, errors in reserving video recording due to erroneous key operation can be prevented.

Although the present invention has been described and illustrated in detail, it is clearly understood that the same is by way of illustration and example only and is not to be taken by way of limitation.

## Claims

1. A video tape recorder comprising:
means (1, 2, 3) for receiving teletext data multiplexed in a vertical blanking period of a transmitted television video signal;
means (8, 9, 10) for extracting from the received teletext data at least character data indicative of time information related to a program to be broadcasted;
time decoding means for decoding said time information; and
means (20) to utilize said decoded time information in pre-programming the video recording of said program to be broadcasted;
**characterized in** that:
character group classifying means (6b) classify said character data into at least one character group by determining the type of successive characters constituting said character data and by grouping continuous characters of the same type as one group, said at least one character group containing numeric data; and
said time decoding means (6c) contains means for distinguishing between character groups containing numeric data and character groups containing non-numeric data and decodes said time information from the data only in the character groups containing numeric data, thereby decoding said time information regardless of any non-numeric data in said original character data.

2. A video tape recorder according to claim 1, further comprising
first memory means (12a) for storing the character group classified by said character group classifying means (6b).

3. A video tape recorder according to claim 1 or 2, further comprising:
second memory means (12b) for storing time information decoded by said time decoding means.

4. A video tape recorder according to claim 3, further comprising:
third memory means (19) for storing data for pre-programming the video recording; and
means (6a) for transferring the time information stored in said second memory means (12b) to said third memory means (19) in response to an external instruction.

5. A video tape recorder according to claim 1, wherein said time decoding means further comprises
means for recognizing a character group containing a separator.

6. A video tape recorder according to claim 5, wherein said time decoding means further comprises
means for determining whether or not decoded time date is proper.

7. A video tape recorder comprising:
means (1, 2, 3) for receiving teletext data multiplexed in a vertical blanking period of a transmitted television video signal;
means (8, 9, 10) for extracting from the received teletext data at least character data indicative of date information related to a program to be broadcasted;
date decoding means for decoding said date information; and
means (20) to utilize said decoded date information in pre-programming the video recording of said program to be broadcasted;
**characterized in** that:
character group classifying means (6b) classify said character data into at least two character groups by determining the types of successive characters constituting said character data and by grouping continuous characters of the same type as one group, said at least two character groups containing numeric data and a character group indicating the month; and
said date decoding means (6d) contains means for distinguishing between character groups containing numeric data, character groups containing month data and character groups containing non-numeric data and decodes said date information from the data in the character groups containing numeric data and a character group indicating the month, thereby decoding said date information regardless of any non-numeric or non-date data in said original character data.

8. A video tape recorder according to claim 7, further comprising
first memory means (12a) for storing character groups classified by said character group classifying means (6b).

9. A video tape recorder according to claim 7 or 8, further comprising
second memory means (12c) for storing date information decoded by said date decoding means.

10. A video tape decoder according to claim 9, further comprising
third memory means (19) for storing data for pre-programming the video recording, and
means (6a) for transferring the date information stored in said second memory means (12e) to said third memory means (19) in response to an external instruction.

11. A video tape recorder according to claim 7, wherein said date decoding means comprises
means for recognizing a character group containing a separator.

12. A video tape recorder according to claim 11, wherein said date decoding means further comprises
means for determining whether or not decoded date data is proper.

## Patentansprüche

1. Videoband-Aufzeichnungsgerät mit:
einer Einrichtung (1, 2, 3) zum Empfangen von Teletextdaten, die in einer vertikalen Austastperiode eines übertragenen Fernseh-Videosignals gemultiplext werden;
einer Einrichtung (8, 9, 10), um aus den empfangenen Teletextdaten zumindest Zeichendaten zu extrahieren, die auf Zeitinformation bezüglich eines auszustrahlenden Programmes hinweisen;
einer Zeit-Dekodiereinrichtung zum Dekodieren der Zeitinformation; und
einer Einrichtung (20) zum Verwenden der dekodierten Zeitinformation beim Vorprogrammieren der Videoaufzeichnung des auszustrahlenden Programmes;
**dadurch gekennzeichnet,** daß:
eine Zeichengruppe-Klassifiziereinrichtung (6b) die Zeichendaten in mindestens eine Zeichengruppe klassifiziert, indem die Art aufeinanderfolgender Zeichen bestimmt wird, welche die Zeichendaten bilden, und indem kontinuierliche Zeichen derselben Art als eine Gruppe klassifiziert werden, wobei die mindestens eine Zeichengruppe numerische Daten enthält; und
die Zeit-Dekodiereinrichtung (6c) eine Einrichtung enthält, um zwischen Zeichengruppen, die numerische Daten enthalten, und Zeichengruppen, die nicht-numerische Daten enthalten, zu unterscheiden und die Zeitinformation von den Daten nur in den Zeichengruppen, die numerische Daten enthalten, dekodiert, wodurch die Zeitinformation unabhängig von jeglichen nicht-numerischen Daten in den ursprünglichen Zeichendaten dekodiert wird.

2. Videoband-Aufzeichnungsgerät nach Anspruch 1, das weiterhin eine erste Speichereinrichtung (12a) enthält, um die durch die Zeichengruppe-Klassifiziereinrichtung (6b) klassifizierte Zeichengruppe zu speichern.

3. Videoband-Aufzeichnungsgerät nach Anspruch 1 oder 2, das weiterhin eine zweite Speichereinrichtung (12b) enthält, um die durch die Zeit-Dekodiereinrichtung dekodierte Zeitinformation zu speichern.

4. Videoband-Aufzeichnungsgerät nach Anspruch 3, das weiterhin aufweist:
eine dritte Speichereinrichtung (19) zum Speichern von Daten zum Vorprogrammieren der Video-Aufzeichnung; und
eine Einrichtung (6a) zum Überführen der in der zweiten Speichereinrichtung (12b) gespeicherten Zeitinformation zu der dritten Speichereinrichtung (19) als Reaktion auf eine externe Anweisung.

5. Videoband-Aufzeichnungsgerät nach Anspruch 1, bei dem die Zeit-Dekodiereinrichtung weiterhin eine Einrichtung zum Erkennen einer Zeichengruppe aufweist, die einen Separator enthält.

6. Videoband-Aufzeichnungsgerät nach Anspruch 5, bei dem die Zeit-Dekodiereinrichtung weiterhin eine Einrichtung aufweist, um zu bestimmen, ob die dekodierten Zeitdaten richtig sind oder nicht.

7. Videoband-Aufzeichnungsgerät mit:
einer Einrichtung (1, 2, 3) zum Empfangen von Teletextdaten, die in einer vertikalen Austastperiode eines übertragenen Fernseh-Videosignals gemultiplext werden;
einer Einrichtung (8, 9, 10), um aus den empfangenen Teletextdaten zumindest Zeichendaten zu extrahieren, die auf Datuminformation bezüglich eines auszustrahlenden Programmes hinweisen;
einer Datum-Dekodiereinrichtung zum Dekodieren der Datuminformation; und
einer Einrichtung (20) zum Verwenden der dekodierten Datuminformation beim Vorprogrammieren der Videoaufzeichnung des auszustrahlenden Programmes;
**dadurch gekennzeichnet,** daß:
eine Zeichengruppe-Klassifiziereinrichtung (6b) die Zeichendaten in mindestens zwei Zeichengruppen klassifizieren, indem die Art aufeinanderfolgender Zeichen bestimmt wird, welche die Zeichendaten bilden, und indem kontinuierliche Zeichen derselben Art als eine Gruppe klassifiziert werden, wobei die mindestens zwei Zeichengruppen numerische Daten und eine auf den Monat hinweisende Datengruppe enthalten; und
eine Datum-Dekodiereinrichtung (6d) eine Einrichtung enthält, um zwischen Zeichengruppen, die numerische Daten enthalten, Zeichengruppen, die Monatsdaten enthalten, und Zeichengruppen, die nicht-numerische Daten enthalten, zu unterscheiden und die Datuminformation von den Daten in den Zeichengruppen, die numerische Daten enthalten, und einer auf den Monat hinweisenden Zeichengruppe dekodiert, wodurch die Datuminformation unabhängig von jeglichen nicht-numerischen Daten oder Nicht-Datumdaten in den ursprünglichen Zeichendaten dekodiert wird.

8. Videoband-Aufzeichnungsgerät nach Anspruch 7, das weiterhin eine erste Speichereinrichtung (12a) enthält, um die durch die Zeichengruppe-Klassifiziereinrichtung (6b) klassifizierte Zeichengruppe zu speichern.

9. Videoband-Aufzeichnungsgerät nach Anspruch 7 oder 8, das weiterhin eine zweite Speichereinrichtung (12c) enthält, um die durch die Datum-Dekodiereinrichtung dekodierte Datuminformation zu speichern.

10. Videoband-Aufzeichnungsgerät nach Anspruch 9, das weiterhin aufweist:
eine dritte Speichereinrichtung (19) zum Speichern von Daten zum Vorprogrammieren der Video-Aufzeichnung; und eine Einrichtung (6a) zum Überführen der in der zweiten Speichereinrichtung (12c) gespeicherten Datuminformation zu der dritten Speichereinrichtung (19) als Reaktion auf eine externe Anweisung.

11. Videoband-Aufzeichnungsgerät nach Anspruch 7, bei dem die Datum-Dekodiereinrichtung weiterhin eine Einrichtung zum Erkennen einer Zeichengruppe aufweist, die einen Separator enthält.

12. Videoband-Aufzeichnungsgerät nach Anspruch 11, bei dem die Datum-Dekodiereinrichtung weiterhin eine Einrichtung aufweist, um zu bestimmen, ob die dekodierten Datumdaten richtig sind oder nicht.

## Revendications

1. Enregistreur à bande vidéo, comprenant:
un moyen (1, 2, 3) pour recevoir des données de télétexte multiplexées dans une période de suppression verticale d'un signal vidéo de télévision transmis;
un moyen (8, 9, 10) pour extraire à partir desdites données de télétexte reçues au moins des données de caractère indicatrices d'information de temps en relation à un programme qui doit être radiodiffusé;
un moyen décodeur de temps pour décoder ladite information de temps; et
un moyen (20) pour utiliser ladite information de temps décodée lors la préprogrammation de l'enregistrement vidéo dudit programme qui doit être radiodiffusé;
**caractérisé en** ce que:
ledit moyen classificateur de groupes de caractères (6b) classifie lesdites données de caractère dans au moins un groupe de caractères en déterminant le type de caractères successifs constituant lesdites données de caractère et en regroupant des caractères continus d'un même type sous forme d'un seul groupe, ledit au moins un groupe de caractères comportant des données numériques; et
un moyen décodeur de temps (6c) comporte un moyen pour distinguer des groupes de caractères comportant des données numériques et des groupes de caractères comportant des données non-numériques, et ne decode ladite information de temps qu'à partir des données dans lesdits groupes de caractères comportant des données numériques, ce par quoi on décode ladite information de temps sans tenir compte de n'importe quelles données non-numériques dans lesdites données de caractère originales.

2. Enregistreur à bande vidéo selon la revendication 1, comprenant en outre
un premier moyen de mémoire (12a) pour mémoriser ledit groupe de caractères classifié par ledit moyen classificateur de groupes de caractères (6b).

3. Enregistreur à bande vidéo selon la revendication 1 ou 2, comprenant en outre un second moyen de mémoire (12b) pour mémoriser de l'information de temps décodée par ledit moyen décodeur de temps.

4. Enregistreur à bande vidéo selon la revendication 3, comprenant en outre:
un troisième moyen de mémoire (19) pour mémoriser des données pour la préprogrammation dudit enregistrement vidéo; et
un moyen (6a) pour transférer ladite information de temps mémorisée dans ledit second moyen de mémoire (12b) audit troisième moyen de mémoire (19) en réponse à une instruction externe.

5. Enregistreur à bande vidéo selon la revendication 1, dans lequel ledit moyen décodeur de temps comprend en outre un moyen pour reconnaître un groupe de caractères comportant un séparateur.

6. Enregistreur à bande vidéo selon la revendication 5, dans lequel ledit moyen décodeur de temps comprend en outre un moyen pour déterminer si des données de temps décodées sont propres ou non.

7. Enregistreur à bande vidéo, comprenant:
un moyen (1, 2, 3) pour recevoir des données de télétexte multiplexées dans une période de suppression verticale d'un signal vidéo de télévision transmis;
un moyen (8, 9, 10) pour extraire à partir desdites données de télétexte reçues au moins des données de caractère indicatrices d'information de date en relation à un programme qui doit être radiodiffusé;
un moyen décodeur de temps pour décoder ladite information de date; et
un moyen (20) pour utiliser ladite information de date décodée lors la préprogrammation de l'enregistrement vidéo dudit programme qui doit être radiodiffusé;
**caractérisé en** ce que:
un moyen classificateur de groupes de caractères (6b) classifie lesdites données de caractère dans au moins deux groupes de caractères en déterminant le type de caractères successifs constituant lesdites données de caractère et en regroupant des caractères continus d'un même type sous forme d'un seul groupe, lesdits au moins deux groupes de caractères comportant des données numériques et un groupe de caractères indicateur du mois; et
un moyen décodeur de date (6c) comporte un moyen pour distinguer des groupes de caractères comportant des données numériques, des groupes de caractères comportant des données de mois, et des groupes de caractères comportant des données non-numériques, et decode ladite information de date à partir des données dans lesdits groupes de caractères comportant des données numériques et un groupe de caractères indicateur du mois, ce par quoi on décode ladite information de date sans tenir compte de n'importe quelles données non-numériques ou non-date dans lesdites données de caractère originales.

8. Enregistreur à bande vidéo selon la revendication 7, comprenant en outre
un premier moyen de mémoire (12a) pour mémoriser ledit groupe de caractères classifié par ledit moyen classificateur de groupes de caractères (6b).

9. Enregistreur à bande vidéo selon la revendication 7 ou 8, comprenant en outre un second moyen de mémoire (12c) pour mémoriser de l'information de date décodée par ledit moyen décodeur de temps.

10. Enregistreur à bande vidéo selon la revendication 9, comprenant en outre:
un troisième moyen de mémoire (19) pour mémoriser des données pour la préprogrammation dudit enregistrement vidéo; et
un moyen (6a) pour transférer ladite information de date mémorisée dans ledit second moyen de mémoire (12c) audit troisième moyen de mémoire (19) en réponse à une instruction externe.

11. Enregistreur à bande vidéo selon la revendication 7, dans lequel ledit moyen décodeur de temps comprend en outre un moyen pour reconnaître un groupe de caractères comportant un séparateur.

12. Enregistreur à bande vidéo selon la revendication 11, dans lequel ledit moyen décodeur de temps comprend en outre un moyen pour déterminer si des données de date décodées sont propres ou non.
